Europäisches Patentamt

European Patent Office

Office européen des brevets

(11) Publication number: **0 126 539**
A2

# EUROPEAN PATENT APPLICATION

(21) Application number: 84302468.8

(22) Date of filing: 11.04.84

(51) Int. Cl.³: **G 11 B 23/04**

(30) Priority: 17.05.83 JP 72551/83
20.05.83 JP 76469/83
13.10.83 JP 158474/83

(43) Date of publication of application: 28.11.84
Bulletin 84/48

(84) Designated Contracting States: **AT BE CH DE FR GB LI LU NL SE**

(71) Applicant: **TEAC CORPORATION, 3-7-3, Naka-cho, Musashino-shi Tokyo (JP)**

(72) Inventor: **Shimizu, Tokuzo, 2-4-7 Tamagawa-Denenchofu, Setagaya-ku Tokyo (JP)**

(74) Representative: **Sturt, Clifford Mark et al, MARKS & CLERK 57-60 Lincoln's Inn Fields, London WC2A 3LS (GB)**

(54) Audio compact cassette.

(57) An audio compact cassette for use in a cassette tape recorder comprises a frame body (1) having an opening (11) and a roll of recording tape (6) wound on a pair of tape reels (4) which are mounted inside the frame body in such a state that they can be taken out of the frame body through the opening (11) of the frame body. The compact cassette makes it possible to utilize a number of recording tapes by use of only one cassette case with ease in the same manner as an ordinary cassette and materialize miniaturization of a cassette system.

- 1 -

Title:  Audio Compact Cassette

## DESCRIPTION

This invention relates to an audio compact cassette for use in a cassette tape recorder, and more particularly to an audio compact cassette with provision for exchange of a roll of magnetic recording tape wound on one or two tape reels for another roll of recording tape.

It has been known that an audio compact cassette accommodating a length of magnetic recording tape is generally provided with a pair of tape winding hubs of an approximately annular shape, which are rotatably supported by hub retaining members so as to wind the recording tape therearound inside a cassette case. The compact cassette of the conventional principle entails a disadvantage that the recording tape is rubbed against the inner walls of the cassette case while being fed from one of the hubs to the other hub by rotating the hubs, thereby causing irregular rotation of the reels. Such irregular rotation of the hubs is responsible for sound reproduction being deteriorated in fidelity and causes sound distortion in recording. Besides, the recording tape is damaged by being rubbed against the cassette case during the course of prolonged use.

An improved audio compact cassette has hitherto been proposed which makes use of a pair of tape winding hubs each provided at the opposite side faces thereof with thin disk flanges. With this arrangement, the recording tape is prevented from coming into direct contact with the inner walls of the cassette case when the hubs are rotated in recording or reproducing, to thereby remedy the shortcoming mentioned above. Furthermore, in this compact cassette, the cassette case is formed of a transparent material so that the rotating hubs can be observed through the cassette case. The compact cassette has also won considerable acclaim for its sightly appearance.

Such an audio compact cassette has been taking of the place of a phonograph record; nevertheless, the space occupied with the compact cassettes is increased so much as to collect the cassettes. Because the compact cassette is handy and ease of handling in recording and reproducing, it is now finding widespread acceptance for actual use. However, the sound quality of the cassette recording tape is inevitably deteriorated with being repeatedly used for recording and reproducing.

In view of the state affairs described above, one object of the present invention is to provide an audio compact cassette for use in a cassette tape recorder, wherein a roll of magnetic recording tape wound on one or two tape reels can freely be taken out of a cassette case so that many different recording tapes can arbitrarily be utilized by use of only one cassette case, thereby reducing the area occupied by and the weight of the cassette tapes and with the result that storage and conveyance thereof are facilitated.

Another object of this invention is to provide an

- 3 -

audio compact cassette which are separable into a magnetic recording tape wound on one or two tape reels and a cassette case for accommodation of the recording tape so that they can be individually put on the market, thereby allowing a user to buy a desired recording or recorded tape at a low price.

Still another object of this invention is to provide an audio compact cassette wherein a magnetic recording tape can easily be connected to or disconnected from a given tape reel.

To accomplish the objects described above, there is provided the audio compact cassette according to this invention which comprises a pair of tape reels onto which a length of recording tape is wound, a cassette case or frame body provided on at least one portion of the peripheral edge side thereof with an opening through which the tape reels are taken out of the interior of the cassette case, and at least one reel retaining member integrally extended from a part of the cassette case or frame body in a state bendable outwardly.

These and other objects, advantages, features, and uses will become more apparent as the description proceeds, when considered with the accompanying drawings, in which:

Figure 1 is a perspective view of one preferred embodiment of the audio compact cassette according to the present invention;

Figure 2 is a front view of the audio compact cassette of Figure 1;

Figure 3 is a plan view of the audio compact cassette of Figure 1 in a state of actual use;

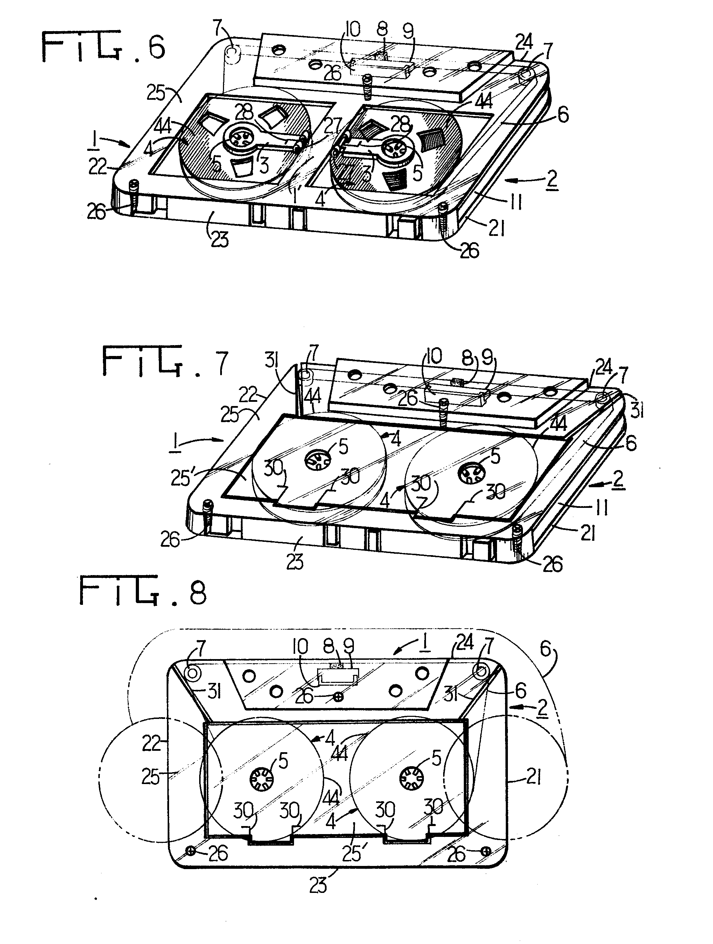

Figure 4 is an enlarged vertical section showing the audio compact cassette in which the tape reel is set in position by means of the reel retaining member;

Figure 5 is an enlarged vertical section of another embodiment, illustrating the condition that the tape reel is set in position by means of the reel retaining member;

Figure 6 is a perspective view of still another embodiment of the audio compact cassette according to the present invention;

Figure 7 is a perspective view of yet another embodiment of the audio compact cassette according to the present invention;

Figure 8 is a plan view illustrating the audio compact cassette of Figure 7 in use;

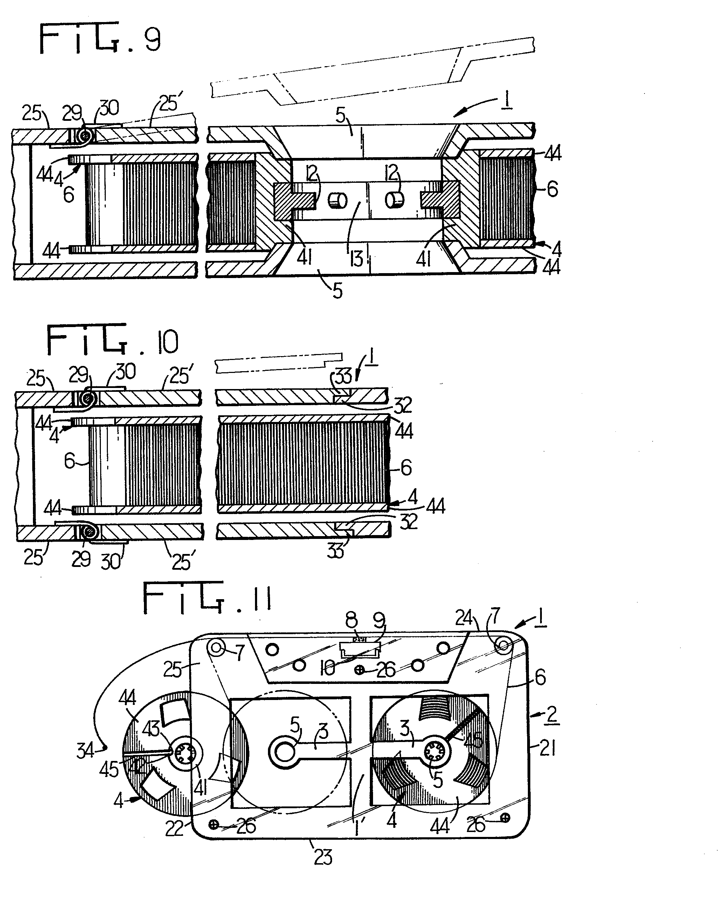

Figures 9 and 10 are longitudinal sectional views illustrating the construction of the tape retaining member of the audio compact cassette according to the present invention;    and

Figure 11 is a plan view of a further embodiment in which the recording tape is easily connected to or disconnected from tape reel.

One embodiment of the present invention will be described in detail hereinafter with reference to the accompany-

- 5 -

ing drawings.

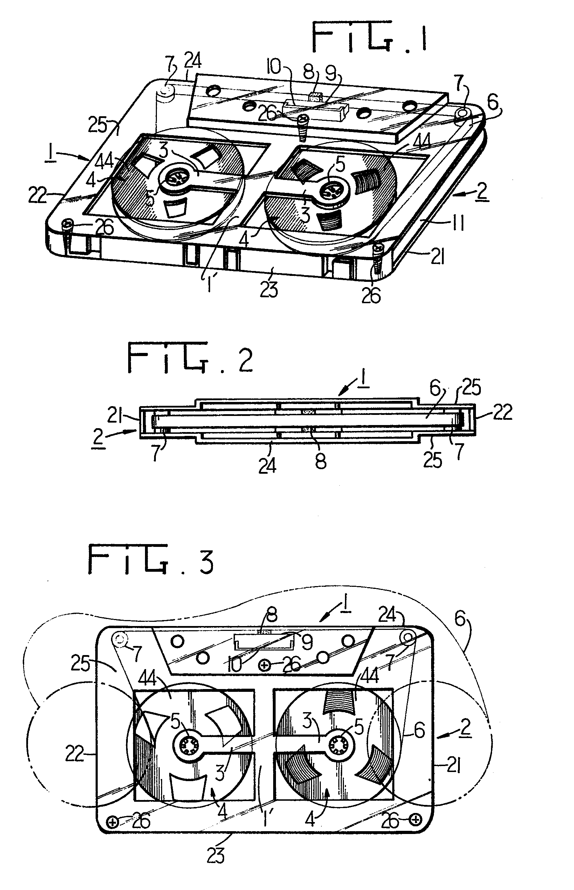

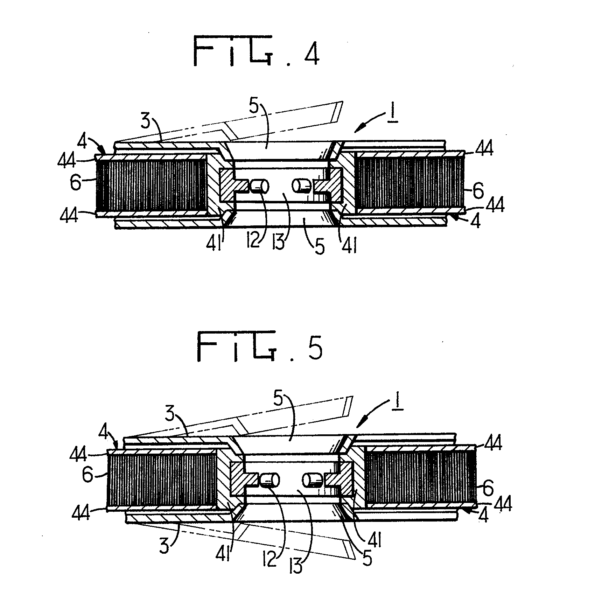

Referring to the drawings, the reference numeral 1 denotes a frame body which may be constructed like a cassette case of a conventional audio tape cassette or formed by fitting two half panels 25 to each other by means of tapping screws 26 as illustrated in FIGS. 1 and 3. It may be advantageous to form at least one of the half panels 25 of a transparent material. Denoted by 11 is an opening portion bored on the peripheral edge side 2 of the frame body. Such an opening portion 11 may be bored only on each of the lateral edge sides 21 and 22, or may be bored on the rear edge side 23. By 3 are denoted reel retaining members which are extended from the frame body 1 or a crossplate 1' of the frame body and provided at their free ends with keep members 5 for pivotally supporting the tape reels 4. The reel retaining members 3 provides flexibility so as to allow it to be inclined or bent outwardly. These reel retaining members 3 may be extended inwardly from the frame body in the vicinity of the lateral edge sides 21 and 22 or the front edge side 24, or the rear edge side 23.

Furthermore, the reel retaining members 3 is formed in the shape of the letter "I" as illustrated in the drawings. However, they may be shaped in "Y", "V" or an inverted "V". The reel retaining members may be designed in such a manner that one of the reel retaining members is bendable and a keep member 5 fixed on the frame body as in a conventional tape cassette is adopted as the other reel retaining member. Otherwise, as illustrated in FIG. 5, the opposite reel retaining members 3 may be disposed on both sides of one of the tape reels. Further, the reel retaining members of this type can be used for the respective tape reels. Of course, it is possible to retain in position one of the tape reels by means of the pair of reel retaining members 3 and the other tape reel by means of the reel retaining member 3 and the keep member 5 mounted on the frame body 1.

6 denotes a roll of magnetic recording tape wound on the tape reels 4; 7 guide rollers mounted rotatably at the corners on the front side of the cassette case 1; 8 a pressure pad of felt; 9 a leaf spring to which the felt pad is attached and which is supported by a metal shield formed in the shape of an angular "U"; and 12 protrusions on the inner surface of the center hole 13 in the hub of the tape reel 4. The front edge side 24 intervening between two guide rollers 7 for guiding the recording tape 6 and the lateral edge sides 21 and 22 extending from the tape reels 4 to the guide rollers 7 are kept open. It may otherwise open only one of the lateral edge sides 21, 22.

Actual use of this compact cassette of this invention will be described hereinafter.

First, one of the tape reels 4 on which a length of tape 6 is wound is inserted inside the frame body 1 through the opening portion 11 of the lateral edge side 21 while the reel retaining member 3 is bent outwardly, and then the keep member 5 of one of the reel retaining member is agreed with the center hole 13 of one of the tape reels 4 so as to hold the tape reel 4 by means of the opposite reel retaining members 3.

- 7 -

Subsequently, the recording tape 6 is brought into contact with one of the guide roller 7, the felt 8 and the other guide roller 7 so that the recording tape 6 is stretched over the front edge side 20.

Thereafter, the other tape reel 4 is inserted into the frame body 1 through the opening portion 11 formed on the lateral side 22 while the reel retaining member 3 is bent outwardly, so that the tape reel 4 is held between the opposite reel retaining members 3.

The compact cassette thus constructed can be used in much the same way as though it was set in a cassette taperecorder for recording or reproducing. In case where the recording tape 6 wound onto the tape reels is exchange for another recording tape, in a topsy-turvy proceeding, the tape reels 4 are removed simultaneously or one by one from the freme body 1 by bending outwardly one or two reel retaining members 3 and taking the tape reels out of the cassette case through the opening portions 11 of the lateral edge sides 21 and 22. The tape reels are lastly replaced in a cassette holder.

Another embodiment will be described with reference to FIG. 6. The reel retaining member 3 provided at their free ends with the keep members 5 are pivotally mounted on the crossplate 1' of the frame body 1 by means of a pivotal pins 27 and kept inwardly energized by means of springs 28. In case where a flat panel is used as a panel half 25, the keep members 5 are formed on the flat panel as hitherto. The aforementioned reel retaining member 3 is formed in the shape

0126539

- 8 -

of the letter "I". However, the shape of the reel retaining member can be suitably chosen, for example, "Y" or "V". Further, the reel retaining member 3 may be supported at the front portion 24, the rear portion 23 or the lateral side portions 21 and 22 of the half panel 2, or at the crossplate 1' of the frame body 1 as illustrated.

Actual use of this embodiment will be described hereinafter. One of the tape reels on which the recording tape is wound is inserted into the cassette case throngh the opening portion 11 of one of the lateral edge sides 21 and 22 while the corresponding reel retaining member 3 is bent outwardly against the energizing force of the spring 28, and then, when the center hole 13 of the tape reel 4 is placed between the keep members 5, the reel retaining member 3 is released so as to engage the keep members 5 with the center hole 13 and consequently secure in position the tape reel 4. the recording tape 6 extending outward from the tape reel 4 secured is stretched berween the two guide rollers 7 and the other reel 4 is inserted inside the cassette case through the opening portion 11 of the rightward edge side 21 or the leftward edge side 22. After this, the tape reel 4 is secured in position between the keep members 5 by means of the reel retaining member 3 in the same way as above. This operation for securing the tape reels 4 may be accomplished by first applying the recording tape 6 to the opening portion 11 of the front edge portion 24 and inserting the two tape reels 4 inside the cassette case through the opening portions 11 of

0126539

the lateral edge sides 21 and 22 at once to thereby secure in position the tape reels 4.

Still another embodiment will be described below with reference to FIG. 7. A part of the half panel 25 serves as window 25'and is pivotally supported at one of the front, rear, left and right lateral sides thereof so that the panel with the window 25' can be outwardly rotated around the pivot pin 29 against the energizing force of the spring 30. Thus, the half panel 25 with the window 25' is drawn up so as to permit the keep members 5 mounted directly on the half panel with the window 25' to be released from the center holes 13 of the tape reels 4 and consequently, the tape reels 4 can be taken out from the cassette case. When assembled, the keep members 5 may be fitted into the center holes 13 of the tape reels 4. Both half panels 25 may be provided with respective windows and pivotally mounted on the frame body 1 by use of the springs 30. Otherwise, one of the half panels 25 may be fixed and the other half panel may be provided with the window 25' and pivotally mounted in a state rotatably upward as mentioned above. If the half panel 25 is kept open in part to form the window 25', the lateral edge sides 21 and 22 and the front edge side 24 of the frame body 1 need not be open because the tape reels 4 can be taken out and set through the window 25' in the half panel 25. However, the cassette case necessitates provision of a path 31 for allowing passage of the recording tape over the space in front of the guide rollers 7 through the window formed by drawing up the half panel 25. The half panel 25 may be divided into two pieces so that they can be opened corresponding to the respective tape reels 4. Further, the cassette case may be designed in such a manner that each half panel 25 is pivotall supported on its one side without using a spring and the engaging steps 32 is formed on the opposite side to the pivotal pin 29 so as to mate the engaging steps 32 with a stage projection 33 of the frame body 1.

FIG 11 is other preferred embodiment representing further improved version of the preferred embodiment of this invention so far described.

One tape reel 4 has a slot groove 42 on its circumferential wall. The slot groove 42 may be formed in the respective tape reels 4. An engaging hole 43 communicating with the slot groove 42 is bored in the tape reel 4.

Meanwhile, the recording tape 6 is provided at its terminal end with an engaging member 34. The diameter of the engaging member 34 is larger then the width of the slot groove 42 and is equal to or slightly smaller than that of the engaging hole 43 of the tape reel 4 so as to allow the engaging member 34 to be inserted into the engaging hole 43 of the tape reel 4 but not to pass through the slot groove 42. This engaging member may be formed by coiling fixedly the terminal portion of the recording tape 6, or attaching a small rod or the like to the end of the recording tape 6. The disk-like flange 44 of the tape reel 4 is provided with a slit 45 to allow the recording tape 6 to pass therethrough. The engaging hole 43 penetrates the flange 44.

In the case where the compact cassette of this embodiment is used, the tape reel 4 on which the recording tape 6 is wound is first inserted inside the cassette case through the opening of the lateral edge side 21 or 22 while bending the reel retaining member 3 outwardly. Then, the tape reel 4 is pivotally retained between the opposite reel retaining members 3 by fitting the opposite keep member 5 into the center hole 13 of the tape reel. Subsequently, the terminal end of the recording tape 6 wound around the tape reel is drawn out of the cassette case, and the engaging member 34 attached to the end of the recording tape is inserted into the engaging hole 43 bored in another tape reel 4 at the same time when the recording tape 6 is inserted through the slit 45 and the slot 42, consequently to connect the two tape reels 4 with each other through the medium of the recording tape 6. Thereafter, while bringing the recording tape 6 into contact with the guide rollers 7 and the pressure pad 8, the latter tape reel 4 is inserted between the reel retaining members 3 through the opening of the lateral edge side 21 or 22 thereby to pivotally retain the latter tape reel 4 by fitting the opposite keep members 5 into the center hole 13 of the tape reel. Otherwise, the engaging member 34 at the terminal end of the recording tape 6 may be secured to the latter tape reel 4 in the same way as descrived above in such a state that the tape reel 4 is retained between the opposite keep member 5.

In this embodiment, the reel retaining members 3 may be pivotally supported and inwardly energized by means of a spring, without depending on the inward resilient force of the reel retaining member. A part of the half panel 25 may be pivotally supported at one side thereof like a single casement windiw in a state energized inwardly by means of a spring or in such a state that the other side thereof can be engaged with the edge portion of the half panel 25. Further, the casement window-like panel may be provided with one or two reel retaining members 5 so that the tape reels can be pivotally secured between the half panel capable of opening and the fixed half panel.

When the tape reel 4 is taken out of the frame body 1, the recording tape 6 is released from one of paired tape reels 4 in a topsy-turvy measure and the tape reel 4 is taken out of the interior of the frame body 1 while bending outwardly the reel retaining member 3 for the tape reel 4 so as to disengage the opposite keep members 5 from the hole 13 of the tape reel. Otherwise, the two tape reels are simultaneously taken out of the frame body 1 and then, the recording tape 6 is disconnected from the tape reel 4.

- 13 -

## CLAIMS

1. An audio compact cassette comprising a pair of tape reels on which a length of magnetic recording tape is wound; a frame body having upper and lower half panels and provided on at least one portion thereof with an opening for allowing said tape reels to pass therethrough; and a pair of reel retaining members disposed on one of said half panels of the frame body, said retaining members being bendable outwardly.

2. An audio compact cassette according to claim 1, wherein said pair of reel retaining members are integrally formed on said half panel of the frame body.

3. An audio compact cassette according to claim 1, wherein said pair of reel retaining members are pivotally supported on said one half panel of the frame body and biassed inwardly by means of a spring.

4. An audio compact cassette according to claim 1, wherein at least one half panel is provided with a window which is pivotally supported at one side thereof by means of a pivot pin so as to permit the tape reels to be taken out of the frame body through said window.

5. An audio compact cassette according to claim 1, wherein at least one of said tape reels is provided on its circumference with a slot groove and an engaging hole communicating with said slot groove, and the recording tape is provided at one terminal end thereof with an engaging member capable of being fitted into said engaging hole of said tape reel, whereby the recording tape is detachably connected to said tape reel.

FIG.1

FIG.2

FIG.3

## FIG.4

## FIG.5

FIG.6

FIG.7

FIG.8

0126539

4/4

FIG.9

FIG.10

FIG.11